# EUROPEAN PATENT APPLICATION

(11) **EP 4 772 663 A1**
(43) Date of publication of application: **08.07.2026**
(21) Application number: 24921430.5
(22) Date of filing: 10.09.2024
(51) Int. Cl.: C22C 33/06, C22C 38/00, C22C 38/02, C22C 38/04, C22C 38/06, C22C 38/42, C22C 38/44, C22C 38/48, C22C 38/50

(54) **PRODUCTION METHOD FOR HIGH-FRACTURE-TOUGHNESS STEEL PLATE**

(30) Priority: 04.02.2024 CN 202410156193
(71) Applicant: Institute of Research of Iron and Steel, Jiangsu Province/Sha-Steel, Co. Ltd (CN), Suzhou, Jiangsu 215625 (CN); University Of Science And Technology Beijing, Beijing 100083 (CN); Jiangsu Shagang Group Co., Ltd., Suzhou, Jiangsu 215625 (CN)
(72) Inventor: LU, Chunjie, Suzhou, Jiangsu 215625 (CN); QU, Jinbo, Suzhou, Jiangsu 215625 (CN); ZHEN, Fan, Suzhou, Jiangsu 215625 (CN); PANG, Zhouyi, Suzhou, Jiangsu 215625 (CN); SHANG, Chengjia, Suzhou, Jiangsu 215625 (CN); XIE, Zhenjia, Suzhou, Jiangsu 215625 (CN)
(74) Representative: Gille Hrabal Partnerschaftsgesellschaft mbB Patentanwälte
(86) International application number: PCT/CN2024/118040
(87) International publication number: WO 2025/161405

(57) **Abstract**

The present application discloses a production method for a high fracture toughness steel plate, comprising: a steelmaking, wherein a molten steel contains C 0.03-0.07%, Si 0.15-0.25%, Mn 1.43-1.55%, P≤0.015%, S≤0.003%, Cr 0.05-0.25%, Ni≤0.23%, Cu 0.13-0.25%, Mo≤0.15%, Nb 0.02-0.04%, Ti 0.01-0.02%, Alt 0.02-0.05%, and a strengthening equivalent Req is 0.43-0.57%; a continuous casting, controlling a center segregation grade of a continuous casting slab to be better than Class B 1.0 grade; a heating, a soaking stage temperature being 1130-1220°C, and a soaking time being 320-570 min; a rolling, a finish rolling temperature being 725-860°C; a cooling, a cooling rate being 3-26°C/s, and an outlet water temperature being 210-520°C.

## Description

The present application is based on a Chinese patent application number CN202410156193.3 filed on February 04, 2024, and claims priority to the Chinese patent application.

### TECHNICAL FIELD

The present application belongs to the field of material preparation technology, and specifically relates to a production method for a high fracture toughness steel plate.

### BACKGROUND

Fracture toughness is a characteristic representing a material's ability to resist brittle fracture caused by existing defects, and is an important indicator for evaluating the safety of steel materials in use. The CTOD test adopts full-thickness specimens to simulate loading methods and loading speeds under real conditions, and characterizes the fracture toughness of steel materials through CTOD (Crack Tip Opening Displacement) characteristic values. CTOD is a resistance value displayed by a material when a specimen or component with cracks or crack-like defects experiences unstable fracture starting from these defects, i.e., fracture that no longer rapidly occurs with increasing load.

With the development of resources such as oil and natural gas, as well as the widespread application of wind power generation, the development of these energy sources is gradually moving toward deep-sea and polar environments. Therefore, the demand for marine engineering steel has increased significantly, especially the requirements for quality and performance of steel plates are becoming increasingly higher. On one hand, the large-scale steel structures of deep-sea platforms and polar platforms require steel materials to have a certain strength. On the other hand, deep-sea and polar environments also require higher safety for platforms, requiring steel plates to have higher toughness, especially fracture toughness. Therefore, it is necessary to develop steel plates with high fracture toughness to be suitable for deep-sea and polar environment engineering.

### SUMMARY

An object of the present application is to provide a production method for a high fracture toughness steel plate.

To achieve one of the above invention objects, one embodiment of the present application provides a production method for a high fracture toughness steel plate, comprising the following processes performed in sequence:
(1) molten steel smelting
   a chemical composition of a molten steel obtained by smelting comprises, in percentage by mass: C 0.03-0.07%, Si 0.15-0.25%, Mn 1.43-1.55%, P≤0.015%, S≤0.003%, Cr 0.05-0.25%, Ni≤0.23%, Cu 0.13-0.25%, Mo≤0.15%, Nb 0.02-0.04%, Ti 0.01-0.02%, Alt 0.02-0.05%, N≤0.005%, O≤0.002%, with a balance being Fe and inevitable impurities, wherein a strengthening equivalent Req is 0.43-0.57%, Req=2.5C+Mn/5+Cr/7+Cu/6+Mo/4+Nb/6;
(2) continuous casting
   continuously casting the molten steel obtained from the molten steel smelting process into a continuous casting slab, controlling a center segregation grade of the continuous casting slab to be better than Class B 1.0 grade, the continuous casting slab having no center porosity, and a crack grade being better than 1.0 grade;
(3) heating
   heating the continuous casting slab, a soaking stage temperature being 1130-1220°C, and a soaking time being 320-570 min;
(4) two-stage rolling
   first subjecting the continuous casting slab to a recrystallization rolling to obtain an intermediate slab, and then subjecting the intermediate slab to a non-recrystallization rolling to produce a steel plate, wherein a reduction amount of at least two passes in the recrystallization rolling stage is ≥30 mm, a thickness T of the intermediate slab is ≥170 mm or T≥3t, where t is a thickness of the steel plate in mm; and a finish rolling temperature of the non-recrystallization rolling is 725-860°C;
(5) controlled cooling
   subjecting the steel plate to a water cooling, controlling a cooling rate of the steel plate to be 3-26°C/s, and an outlet water temperature of the steel plate being 210-520°C.

As a further improvement of one embodiment, in the continuous casting process, a mold level fluctuation amplitude is controlled within a range of ±2 mm, an inlet water temperature of a mold is 28-35°C, an inlet-outlet water temperature difference is 4-10°C, a narrow face water flow rate is 550±50 L/min, a wide face water flow rate is 3800±200 L/min, a casting speed is 0.6±0.05 m/min, and a total reduction at a solidification end is 5-6 mm.

As a further improvement of one embodiment, in the two-stage rolling process, when 60 mm≤t<80 mm, a reduction amount of at least two passes in the recrystallization rolling stage is ≥30 mm; when 80 mm≤t<90 mm, a reduction amount of at least two passes in the recrystallization rolling stage is ≥35 mm; when 90 mm≤t≤100 mm, a reduction amount of at least two passes in the recrystallization rolling stage is ≥38 mm.

As a further improvement of one embodiment, the molten steel smelting process comprises a converter smelting, a Ladle Furnace refining and an RH Vacuum degassing refining step performed in sequence;
in the converter smelting step, a total charge of a converter is 200±2 t, a target basicity of a final slag is 4.0, a C content in the molten steel at an end of converter smelting is 0.02-0.06%, P≤0.012%, S≤0.008%, a tapping temperature is 1640±20°C, when 1/6 of the molten steel is tapped, alloys and slag materials are added in an order of ferrosilicon-metallic manganese-aluminum ingot-lime, wherein an addition amount of the aluminum ingot is (0.69+14[O]) kg/t;
in the Ladle Furnace refining step, a low carbon ferrochrome and a FeNb are added to the molten steel for an alloy composition adjustment, followed by adding a calcium carbide to the molten steel for a diffusion deoxidation, after a slag whitening, a deoxidation continues for more than 15 min, a sampling detection is performed and an alloy composition adjustment is conducted before leaving a station, after a chemical composition of the molten steel reaches a target range, the molten steel is maintained for at least 5 min before tapping;
in the RH Vacuum degassing refining step, 0.5±0.05 kg/t of a ferrotitanium is added to the molten steel, followed by subjecting the molten steel to a vacuum degassing and an inclusion removal treatment, controlling a vacuum degree to be <2 mBar and a degassing time to be ≥10 min; thereafter, 140±5 m of a silicon-calcium cored wire is fed into the molten steel for an inclusion modification and a soft stirring treatment, a wire feeding speed of the silicon-calcium cored wire being 1.5±0.5 m/s, a soft stirring time being >12 min, controlling a slag surface fluctuation without exposing the molten steel.

As a further improvement of one embodiment, in the molten steel smelting process, a chemical composition of the molten steel obtained by the smelting comprises, in percentage by mass: C 0.03-0.06%, Si 0.15-0.25%, Mn 1.45-1.55%, P≤0.015%, S≤0.003%, Cr 0.05-0.15%, Cu 0.15-0.25%, Nb 0.02-0.03%, Ti 0.01-0.02%, Alt 0.02-0.05%, N≤0.005%, O≤0.002%, with a balance being Fe and inevitable impurities, and a strengthening equivalent Req being 0.43-0.53%;
in the converter smelting step, 1.8±0.3 kg/t of a copper block are charged into a converter together with a scrap steel and a hot metal for smelting, an addition amount of the ferrosilicon is 1.5±0.3 kg/t, an addition amount of the metallic manganese is 12±2 kg/t, and an addition amount of the lime is 3±1 kg/t;
in the Ladle Furnace refining step, an addition amount of the low carbon ferrochrome is 1.0±0.5 kg/t, and an addition amount of the FeNb is 0.3±0.1 kg/t;
in the two-stage rolling process, a finish rolling temperature of the non-recrystallization rolling is (960-295[C]-77[Mn]-0.002t²-0.24t)±10°C;
in the controlled cooling process, a cooling rate of the steel plate is controlled to be (28-0.24t)+1°C/s, and an outlet water temperature of the steel plate is (453-1.87t)+20°C.

As a further improvement of one embodiment, when t≤60 mm, a microstructure of the steel plate is a polygonal ferrite + a low carbon bainite, and a proportion of the low carbon bainite is 10-45%;
when t>60 mm, a microstructure of the steel plate is a quasi-polygonal ferrite + a low carbon bainite + a degenerated pearlite, a proportion of the quasi-polygonal ferrite is 5-25%, a proportion of the low carbon bainite is 70-85%, and a proportion of the degenerated pearlite is 3-13%;
a yield strength of the steel plate is ≥355 MPa, a tensile strength is 470-630 MPa, a Z-direction tensile strength is ≥450 MPa, and a CTOD value at -10°C is ≥1.6 mm; the steel plate undergoes a welding under a heat input of 7-50 kJ/cm, a low temperature impact energy at -40°C of a heat affected zone of a welded joint is ≥230 J, and a CTOD value at -10°C of a coarse-grained zone and an intercritical zone is ≥1.2 mm.

As a further improvement of one embodiment, in the molten steel smelting process, a chemical composition of the molten steel obtained by the smelting comprises, in percentage by mass: C 0.04-0.07%, Si 0.15-0.25%, Mn 1.45-1.55%, P≤0.015%, S≤0.003%, Cr 0.10-0.20%, Ni 0.08-0.15%, Cu 0.20-0.25%, Nb 0.03-0.04%, Ti 0.01-0.02%, Alt 0.02-0.05%, N≤0.005%, O≤0.002%, with a balance being Fe and inevitable impurities, and a strengthening equivalent Req being 0.45-0.55%;
in the converter smelting step, 1.8±0.3 kg/t of a copper block and 0.85±0.1 kg/t of a nickel plate are charged into a converter together with a scrap steel and a hot metal for smelting, a C content in the molten steel at an end of converter smelting is 0.02-0.05%, an addition amount of the ferrosilicon is 1.7±0.1 kg/t, an addition amount of the metallic manganese is 15±1 kg/t, and an addition amount of the lime is 4.0±0.5 kg/t;
in the Ladle Furnace refining step, an addition amount of the low carbon ferrochrome is 2.1±0.5 kg/t, and an addition amount of the FeNb is 0.5±0.05 kg/t;
in the two-stage rolling process, a finish rolling temperature of the non-recrystallization rolling is (854-295[C]-77[Mn]-0.04t²+4.21t)±10°C;
in the controlled cooling process, a cooling rate of the steel plate is controlled to be (23+0.002t²-0.33t)±1°C/s, and an outlet water temperature of the steel plate is (0.0023t³-0.48t²+28.3t)±20°C.

As a further improvement of one embodiment, a microstructure of the steel plate is a quasi-polygonal ferrite + a low carbon bainite, and a proportion of the low carbon bainite is 35-80%;
a yield strength of the steel plate is ≥420 MPa, a tensile strength is 500-640 MPa, a Z-direction tensile strength is ≥475 MPa, and a CTOD value at -10°C is ≥1.3 mm; the steel plate undergoes a welding under a heat input of 7-50 kJ/cm, a low temperature impact energy at -40°C of a heat affected zone of a welded joint is ≥150 J, and a CTOD value at -10°C of a coarse-grained zone and an intercritical zone is ≥1.0 mm.

As a further improvement of one embodiment, in the molten steel smelting process, a chemical composition of the molten steel obtained by the smelting comprises, in percentage by mass: C 0.03-0.06%, Si 0.15-0.25%, Mn 1.43-1.53%, P≤0.015%, S≤0.003%, Cr 0.15-0.25%, Ni 0.13-0.23%, Cu 0.13-0.22%, Mo 0.07-0.15%, Nb 0.025-0.035%, Ti 0.01-0.02%, Alt 0.02-0.05%, N≤0.005%, O≤0.002%, with a balance being Fe and inevitable impurities, and a strengthening equivalent Req being 0.47-0.57%;
in the converter smelting step, 1.4±0.3 kg/t of a copper block, 1.4±0.3 kg/t of a nickel plate, and 1.4±0.3 kg/t of a ferromolybdenum are charged into a converter together with a scrap steel and a hot metal for smelting, a C content in the molten steel at an end of converter smelting is 0.02-0.06%, an addition amount of the ferrosilicon is 2.5±0.3 kg/t, an addition amount of the metallic manganese is 12±2 kg/t, and an addition amount of the lime is 3±1 kg/t;
in the Ladle Furnace refining step, an addition amount of the low carbon ferrochrome is 2.7±0.5 kg/t, and an addition amount of the FeNb is 0.4±0.1 kg/t;
in the two-stage rolling process, a finish rolling temperature of the non-recrystallization rolling is (955-295[C]-77[Mn]-82[Mo]-0.002t²-0.24t)±10°C;
in the controlled cooling process, a cooling rate of the steel plate is controlled to be (19-0.13t)+1°C/s, and an outlet water temperature of the steel plate is (560+0.02t²-4.5t)±20°C.

As a further improvement of one embodiment, a microstructure of the steel plate is a quasi-polygonal ferrite + a low carbon bainite, a proportion of the low carbon bainite is 65-90%, and an average grain size of the quasi-polygonal ferrite is 4-9 µm;
a yield strength of the steel plate is ≥460 MPa, a tensile strength is 520-675 MPa, a Z-direction tensile strength is ≥495 MPa, and a CTOD value at -10°C is ≥1.1 mm; the steel plate undergoes a welding under a heat input of 7-50 kJ/cm, a low temperature impact energy at -40°C of a heat affected zone of a welded joint is ≥150 J, and a CTOD value at -10°C of a coarse-grained zone and an intercritical zone is ≥0.8 mm.

Compared with the prior art, the beneficial effects of the present application are: (1) Through an optimization design of a chemical composition design scheme, adopting a low C+Mn-Cr-Ni-Cu-Mo composite alloying + Nb-Ti-Al composite microalloying composition system, not only can an excellent strengthening effect be achieved on the finally prepared steel plate, controlling a center segregation of the steel plate and reducing non-metallic inclusions, making the steel plate have an excellent fracture toughness, an anti-lamellar tearing performance, a low temperature impact toughness and a welding performance, in addition, a combination of Ni and Cu can change a structure of a copper-rich phase in an oxide layer, inhibiting a Cu penetration into a matrix and avoiding a risk of a copper embrittlement; and the cost is controlled, avoiding problems such as a production difficulty caused by an overly strict content control requirement;
(2) Through an optimization design of a chemical composition design scheme combined with a control of a production process, not only are an aging treatment, a quenching heat treatment and a tempering heat treatment in the prior art canceled, and a preparation of a high fracture toughness steel plate can be completed using a TMCP short process procedure without a stacking and a slow cooling, but also a rolling and a cooling procedure are simplified, improving a rolling efficiency and a rolling stability, facilitating a stable execution of a rolling process; and the finally prepared steel plate has a high fracture toughness, a low yield ratio, an excellent low temperature toughness, a welding performance and an anti-lamellar tearing performance, a good safety, can withstand a large deformation cold forming, is high temperature resistant, and has a good application prospect in a marine engineering steel field such as an offshore platform and an offshore wind power.

The term "comprise" and variations of this term used herein, such as "comprises", "comprised", "comprising", "including", "containing", do not exclude other features, components, elements or steps unless the context clearly requires otherwise.

### BRIEF DESCRIPTION OF THE DRAWINGS

FIG. 1 is a metallographic structure diagram at 1/2 thickness of a steel plate in Embodiment 1 of the present application;
FIG. 2 is a metallographic structure diagram at 1/2 thickness of a steel plate in Embodiment 4 of the present application;
FIG. 3 is a metallographic structure diagram at 1/2 thickness of a steel plate in Embodiment 5 of the present application;
FIG. 4 is a metallographic structure diagram at 1/2 thickness of a steel plate in Embodiment 8 of the present application;
FIG. 5 is a metallographic structure diagram at 1/2 thickness of a steel plate in Embodiment 9 of the present application;
FIG. 6 is a metallographic structure diagram at 1/2 thickness of a steel plate in Embodiment 12 of the present application.

### DETAILED DESCRIPTION

The technical scheme of the present application will be further introduced below in combination with specific embodiments, but the scope of protection claimed is not limited only to the descriptions made.

One embodiment of the present application provides a production method for a high fracture toughness steel plate and a high fracture toughness steel plate produced using the production method.

Each process of the production method is introduced in detail in sequence below.

### (1) Molten steel smelting

A chemical composition of a molten steel obtained by smelting comprises, in percentage by mass: C 0.03-0.07%, Si 0.15-0.25%, Mn 1.43-1.55%, P≤0.015%, S≤0.003%, Cr 0.05-0.25%, Ni≤0.23%, Cu 0.13-0.25%, Mo≤0.15%, Nb 0.02-0.04%, Ti 0.01-0.02%, Alt 0.02-0.05%, N≤0.005%, O≤0.002%, with a balance being Fe and inevitable impurities, wherein a strengthening equivalent Req is 0.43-0.57%.

In the chemical composition of the present application:
C is the most basic strengthening element in a steel material, but when a C content is excessive, a fracture toughness of a heat affected zone during a steel welding deteriorates, and in the present application, the C content is limited to 0.03-0.07%.

Si is a strengthening element and a deoxidation element in a steel, but an excessive Si reduces a low temperature toughness of the steel material, and in the present application, a Si content is limited to 0.15-0.25%, which can ensure a deoxidation effect and reduce oxide inclusions in the steel material without affecting the low temperature toughness.

Mn is a solid solution strengthening and a grain refinement strengthening element, which can improve a strength and a hardenability of a steel, but Mn is also an element prone to a segregation and easily forms inclusions, and an excessive Mn affects a fracture toughness, an anti-lamellar tearing performance and a low temperature impact toughness of a core of a steel plate, and in the present application, a Mn content is limited to 1.43-1.55%, which can not only ensure a strength of the steel plate, but also reduce the segregation and avoid a deterioration of the fracture toughness, the anti-lamellar tearing performance and a core low temperature impact toughness of the steel plate caused by MnS inclusions.

Cr can reduce a critical cooling rate of a steel, improve a hardenability, and improve a uniformity of microstructure properties in a thickness direction of a thick steel plate, but an excessive Cr is unfavorable to a plasticity and a toughness of the steel plate, and in the present application, a Cr content is limited to 0.05-0.25%, which can achieve a reasonable matching of strength and toughness.

Ni is an effective element for improving a fracture toughness and a low temperature toughness, but an alloy cost is relatively high, and in the present application, Ni≤0.23% is limited, which is favorable for controlling a cost.

Cu can improve a strength, a toughness and a high temperature resistance of a steel plate to ensure heat treatment properties of the steel plate after a welding, and in the present application, a Cu content is limited to 0.13-0.25%.

Mo is a strong hardenability element and a grain refinement element, which can improve a strength and a toughness, but a cost is relatively high, and in the present application, Mo≤0.15% is limited.

Nb has a grain refinement strengthening effect, but an excessive Nb induces a bainite formation during a welding, which is unfavorable to a low temperature toughness of a heat affected zone of a welded joint, and in the present application, a Nb content is limited to 0.02-0.04%, which can not only ensure the grain refinement strengthening effect, but also avoid adverse effects on the low temperature toughness of the heat affected zone of the welded joint.

Ti is an important nitrogen-fixing and a deoxidation element, but an excessive Ti easily forms a large particle Ti carbonitride in a core of a steel plate, thereby affecting a fracture toughness, a core impact toughness and an anti-lamellar tearing performance of the steel plate, and in the present application, a Ti content is limited to 0.01-0.02%.

Al is a deoxidation element, but an excessive Al easily increases A12O3 inclusions in a steel, thereby affecting a low temperature toughness of the steel, and in the present application, an Alt content is limited to 0.02-0.05%.

P, S, N, O are inevitable impurity elements, and in the present application, P≤0.015%, S≤0.003%, N≤0.005%, O≤0.002% are limited.

The strengthening equivalent Req=2.5C+Mn/5+Cr/7+Cu/6+Mo/4+Nb/6, by limiting the relationships and contents of C, Mn, Cr, Cu, Mo, Nb elements, the proportions of a solid solution strengthening, a grain refinement strengthening, a precipitation strengthening and a transformation strengthening can be comprehensively controlled, thereby making the steel plate have a sufficient strength.

In summary, through an optimization design of a chemical composition design scheme, adopting a low C+Mn-Cr-Ni-Cu-Mo composite alloying + Nb-Ti-Al composite microalloying composition system, not only can an excellent strengthening effect be achieved on the finally prepared steel plate, controlling a center segregation of the steel plate and reducing non-metallic inclusions, making the steel plate have an excellent fracture toughness, an anti-lamellar tearing performance, a low temperature impact toughness and a welding performance, in addition, a combination of Ni and Cu can change a structure of a copper-rich phase in an oxide layer, inhibiting a Cu penetration into a matrix and avoiding a risk of a copper embrittlement; and the cost is controlled, avoiding problems such as a production difficulty caused by an overly strict content control requirement.

It can be understood that the chemical composition of the molten steel obtained from the molten steel smelting process and a chemical composition of a continuous casting slab obtained from a subsequent continuous casting process, as well as a chemical composition of the high fracture toughness steel plate finally prepared by the production method, are all consistent.

Preferably, the molten steel smelting process comprises a converter smelting, a Ladle Furnace refining and an RH Vacuum degassing refining step performed in sequence.

### a. Converter smelting step

Steelmaking raw materials are fed into a converter and mixed into a molten steel, and a deoxidation and an alloying are performed.

Wherein, a total charge of the converter is 200±2 t, a target basicity of a final slag is 4.0, a C content in the molten steel at an end of converter smelting is 0.02-0.06%, P≤0.012%, S≤0.008%, a tapping temperature is 1640±20°C, when 1/6 of the molten steel is tapped, alloys and slag materials are added in an order of ferrosilicon-metallic manganese-aluminum ingot-lime, wherein an addition amount of the aluminum ingot is (0.69+14[O]) kg/t.

Through a control of the converter smelting step, not only can harmful residual elements be controlled to improve a toughness of the finally prepared steel plate, but also an efficient smelting and a safe production can be achieved.

### b. Ladle Furnace refining step

The molten steel after the converter smelting is fed into a Ladle Furnace for a chemical composition adjustment, a temperature control, and an inclusion control.

Specifically, a low carbon ferrochrome and a FeNb are added to the molten steel in the Ladle Furnace for an alloy composition adjustment, followed by adding a calcium carbide to the molten steel for a diffusion deoxidation, after a slag whitening, a deoxidation continues for more than 15 min, a sampling detection is performed and an alloy composition adjustment is conducted before leaving a station, after a chemical composition of the molten steel reaches a target range, the molten steel is maintained for at least 5 min before tapping, that is to say, an addition of smelting raw materials and auxiliary materials is prohibited for at least 5 min before an end of refining.

In this way, a sufficient desulfurization, a deoxidation and an inclusion adsorption can be achieved, thereby improving a fracture toughness, a low temperature toughness and an anti-lamellar tearing performance of the steel plate.

### c. RH Vacuum degassing refining step

An RH circulation degassing equipment is used to perform a vacuum degassing and an inclusion removal treatment on the molten steel after the Ladle Furnace refining, and then a silicon-calcium cored wire is fed into the molten steel for an inclusion modification and a soft stirring treatment.

Specifically, 0.5±0.05 kg/t of a ferrotitanium is added to the molten steel, followed by subjecting the molten steel to a vacuum degassing and an inclusion removal treatment, controlling a vacuum degree to be <2 mBar and a degassing time to be ≥10 min; thereafter, 140±5 m of a silicon-calcium cored wire is fed into the molten steel for an inclusion modification and a soft stirring treatment, a wire feeding speed of the silicon-calcium cored wire being 1.5±0.5 m/s, a soft stirring time being >12 min, controlling a slag surface fluctuation without exposing the molten steel, thereby making inclusions in the molten steel fully modified and floated up, to improve a fracture toughness, a low temperature toughness and an anti-lamellar tearing performance of the steel plate.

### (2) Continuous casting

The molten steel obtained from the molten steel smelting process is continuously cast into a continuous casting slab with a thickness of 320 mm, controlling a center segregation grade of the continuous casting slab to be better than Class B 1.0 grade, the continuous casting slab having no center porosity, and a crack grade being better than 1.0 grade, thereby making a center segregation grade of the finally prepared steel plate better than Class B 0.5 grade.

Specifically, during a continuous casting, a mold level fluctuation amplitude is controlled within a range of ±2 mm to avoid a surface longitudinal crack and a slag entrapment in the continuous casting slab, thereby avoiding a surface crack and a scab defect in a finished steel plate; an inlet water temperature of a mold is 28-35°C, an inlet-outlet water temperature difference is 4-10°C, a narrow face water flow rate is 550±50 L/min, a wide face water flow rate is 3800±200 L/min, a casting speed is 0.6±0.05 m/min, and a total reduction at a solidification end is 5-6 mm, which facilitates a control of an internal quality such as a center segregation and a porosity in the continuous casting slab, thereby controlling a center segregation of the steel plate and improving a fracture toughness and a core low temperature impact toughness of the steel plate.

A chemical composition of the continuous casting slab cast from the molten steel is the same as a chemical composition of the molten steel obtained by the smelting, and will not be described in detail here.

### (3) Heating

The continuous casting slab is heated, a soaking stage temperature being 1130-1220°C, and a soaking time being 320-570 min, which not only enables alloy elements to be fully dissolved in a solid solution and prevents an excessive grain growth, but also facilitates a production scheduling, and can be scheduled together with a high alloy steel requiring a high temperature heating as well as with a high performance steel requiring a low temperature heating.

### (4) Two-stage rolling

First subjecting the continuous casting slab to a recrystallization rolling to obtain an intermediate slab, and then subjecting the intermediate slab to a non-recrystallization rolling to produce a steel plate, wherein a reduction amount of at least two passes in the recrystallization rolling stage is ≥30 mm, a thickness T of the intermediate slab is ≥170 mm or T≥3t, where t is a thickness of the steel plate in mm. In this way, reduction amounts of the two stages can be reasonably distributed, under a condition of a constant total reduction amount, on one hand, original austenite grains can be fully recrystallized and broken and refined, improving a low temperature toughness and a welding performance of the steel plate, and on the other hand, an oxide scale thickness during a rolling can be controlled, making the steel plate have a good surface quality.

Further, a finish rolling temperature of the non-recrystallization rolling is 725-860°C, so that an as-rolled microstructure is fully refined, improving a low temperature toughness, a welding performance and a large deformation cold forming performance of the steel plate.

Preferably, when 60 mm≤t<80 mm, a reduction amount of at least two passes in the recrystallization rolling stage is ≥30 mm; when 80 mm≤t<90 mm, a reduction amount of at least two passes in the recrystallization rolling stage is ≥35 mm; when 90 mm≤t≤100 mm, a reduction amount of at least two passes in the recrystallization rolling stage is ≥38 mm. According to a target thickness of the finally prepared steel plate, a distribution control of pass reduction amounts in the recrystallization rolling stage is performed, which can make a deformation fully penetrate to a core of the steel plate, make original austenite grains fully recrystallized, and refine a microstructure, thereby improving a low temperature toughness and a large deformation cold forming performance of the steel plate.

### (5) Controlled cooling

The steel plate undergoes a water cooling, specifically using a multi-function intermittent cooling system for the water cooling, and controlling a cooling rate of the steel plate to be 3-26°C/s, and an outlet water temperature of the steel plate being 210-520°C. Through a control of a cooling method, the cooling rate, and the outlet water temperature, a precise control of a steel plate microstructure can be achieved, making the steel plate have a high fracture toughness, a low yield ratio, and an excellent low temperature toughness, a welding performance and an anti-lamellar tearing performance, and can also withstand a large deformation cold forming and be high temperature resistant.

After a detection, a center segregation grade of the obtained steel plate is better than Class B 0.5 grade, so that a CTOD value of a heat affected zone of the steel plate after a welding does not deteriorate due to a center segregation; through a sampling of the obtained steel plate and a mechanical property testing, a yield ratio of the obtained steel plate is ≤0.85, a low temperature impact energy at -60°C at different positions in a thickness direction is all ≥250 J, a Z-direction tensile area reduction is ≥65%, and a CTOD value at -10°C is ≥1.1 mm.

Further, after the steel plate undergoes a 5% pre-deformation treatment, or undergoes a 5% pre-deformation + an aging at (250±10)°C for 1 h, a low temperature impact toughness of the steel plate does not decrease, that is, after the steel plate undergoes a large deformation cold forming, or a large deformation cold forming + a long-time aging, the low temperature impact toughness does not decrease.

The steel plate undergoes a welding under a heat input of 7-50 kJ/cm, a low temperature impact energy at -40°C of a heat affected zone of a welded joint is ≥150 J, and a CTOD value at -10°C of a coarse-grained zone and an intercritical zone is ≥0.8 mm; after the welding, a heat treatment at 590±10°C for not more than 6 h, a strength, a low temperature impact toughness, a CTOD fracture toughness, and Z-direction tensile properties of the steel plate all do not decrease.

That is to say, through an optimization design of a chemical composition design scheme combined with a control of a production process, not only are an aging treatment, a quenching heat treatment and a tempering heat treatment in the prior art canceled, and a preparation of a high fracture toughness steel plate can be completed using a TMCP short process procedure without a stacking and a slow cooling, but also a rolling and a cooling procedure are simplified, improving a rolling efficiency and a rolling stability, facilitating a stable execution of a rolling process; and the finally prepared steel plate has a high fracture toughness, a low yield ratio, an excellent low temperature toughness, a welding performance and an anti-lamellar tearing performance, a good safety, can withstand a large deformation cold forming, is high temperature resistant, and has a good application prospect in a marine engineering steel field such as an offshore platform and an offshore wind power.

Three preferred embodiments of the present application are provided below, each providing a production method for a high fracture toughness steel plate and a high fracture toughness steel plate prepared using the production method, to further illustrate the technical scheme of the present application.

### First Embodiment

### (1) Molten steel smelting

A chemical composition of a molten steel obtained by a smelting preferred in this embodiment comprises, in percentage by mass: C 0.03-0.06%, Si 0.15-0.25%, Mn 1.45-1.55%, P≤0.015%, S≤0.003%, Cr 0.05-0.15%, Cu 0.15-0.25%, Nb 0.02-0.03%, Ti 0.01-0.02%, Alt 0.02-0.05%, N≤0.005%, O≤0.002%, with a balance being Fe and inevitable impurities, and a strengthening equivalent Req being 0.43-0.53%.

Preferably, the molten steel smelting process comprises a converter smelting, a Ladle Furnace refining and an RH Vacuum degassing refining step performed in sequence.

### a. Converter smelting step

1.8±0.3 kg/t of a copper block are charged into a converter together with a scrap steel and a hot metal for a smelting, and a deoxidation and an alloying are performed on the obtained molten steel. That is, steelmaking raw materials comprise the copper block, the scrap steel, and the hot metal.

Wherein, a total charge of the converter is 200±2 t, a target basicity of a final slag is 4.0, a C content in the molten steel at an end of converter smelting is 0.02-0.06%, P≤0.012%, S≤0.008%, a tapping temperature is 1640±20°C, when 1/6 of the molten steel is tapped, alloys and slag materials are added in an order of ferrosilicon-metallic manganese-aluminum ingot-lime, wherein an addition amount of the aluminum ingot is (0.69+14[O]) kg/t, an addition amount of the ferrosilicon is 1.5±0.3 kg/t, an addition amount of the metallic manganese is 12±2 kg/t, and an addition amount of the lime is 3+1 kg/t.

### b. Ladle Furnace refining step

The molten steel after the converter smelting is fed into a Ladle Furnace for a chemical composition adjustment, a temperature control, and an inclusion control.

Specifically, 1.0±0.5 kg/t of a low carbon ferrochrome and 0.3±0.1 kg/t of a FeNb are added to the molten steel in the Ladle Furnace for an alloy composition adjustment, followed by adding a calcium carbide to the molten steel for a diffusion deoxidation, after a slag whitening, a deoxidation continues for more than 15 min, a sampling detection is performed and an alloy composition adjustment is conducted before leaving a station, after a chemical composition of the molten steel reaches a target range, the molten steel is maintained for at least 5 min before tapping, that is to say, an addition of smelting raw materials and auxiliary materials is prohibited for at least 5 min before an end of refining.

### c. RH Vacuum degassing refining step

An RH circulation degassing equipment is used to perform a vacuum degassing and an inclusion removal treatment on the molten steel after the Ladle Furnace refining, and then a silicon-calcium cored wire is fed into the molten steel for an inclusion modification and a soft stirring treatment.

Specifically, 0.5±0.05 kg/t of a ferrotitanium is added to the molten steel, followed by subjecting the molten steel to a vacuum degassing and an inclusion removal treatment, controlling a vacuum degree to be <2 mBar and a degassing time to be ≥10 min; thereafter, 140±5 m of a silicon-calcium cored wire is fed into the molten steel for an inclusion modification and a soft stirring treatment, a wire feeding speed of the silicon-calcium cored wire being 1.5±0.5 m/s, a soft stirring time being >12 min, controlling a slag surface fluctuation without exposing the molten steel.

### (2) Continuous casting

The molten steel obtained from the molten steel smelting process is continuously cast into a continuous casting slab with a thickness of 320 mm, controlling a center segregation grade of the continuous casting slab to be better than Class B 1.0 grade, the continuous casting slab having no center porosity, and a crack grade being better than 1.0 grade, thereby making a center segregation grade of the finally prepared steel plate better than Class B 0.5 grade.

Specifically, during a continuous casting, a mold level fluctuation amplitude is controlled within a range of ±2 mm, an inlet water temperature of a mold is 28-35°C, an inlet-outlet water temperature difference is 4-10°C, a narrow face water flow rate is 550±50 L/min, a wide face water flow rate is 3800±200 L/min, a casting speed is 0.6±0.05 m/min, and a total reduction at a solidification end is 5-6 mm.

A chemical composition of the continuous casting slab cast from the molten steel is the same as a chemical composition of the molten steel obtained by the smelting, and will not be described in detail here.

### (3) Heating

The continuous casting slab is heated, a soaking stage temperature being 1130-1220°C, and a soaking time being 320-570 min.

### (4) Two-stage rolling

First subjecting the continuous casting slab to a recrystallization rolling to obtain an intermediate slab, and then subjecting the intermediate slab to a non-recrystallization rolling to produce a steel plate, wherein a reduction amount of at least two passes in the recrystallization rolling stage is ≥30 mm, a thickness T of the intermediate slab is ≥170 mm or T≥3t, where t is a thickness of the steel plate in mm.

Further, a finish rolling temperature of the non-recrystallization rolling is (960-295[C]-77[Mn]-0.002t²-0.24t)±10°C.

Wherein, t is a thickness of the steel plate in mm; [C] represents a mass percentage of C in the continuous casting slab, [Mn] represents a mass percentage of Mn in the continuous casting slab, and so on in the following text.

That is, based on actual mass percentages of C and Mn in the continuous casting slab, a finish rolling temperature of the non-recrystallization rolling is calculated. In a specific implementation, the continuous casting slab may be sampled before a heating process to detect chemical composition contents in the continuous casting slab, including an actual mass percentage of C [C] and an actual mass percentage of Mn [Mn], and then a finish rolling temperature of the non-recrystallization rolling is calculated according to the aforementioned formula, and then a temperature control scheme in the two-stage rolling process is determined.

In this way, this preferred embodiment determines a finish rolling temperature of the non-recrystallization rolling based on actual contents of a chemical composition of the continuous casting slab, thereby establishing a matching relationship between the actual contents of the chemical composition and a finish rolling temperature of the non-recrystallization rolling, making a temperature control range in the two-stage rolling process more reasonable, further controlling a microstructure of the steel plate, and reasonably matching a strength and a toughness of the steel plate. Of course, calculating a finish rolling temperature of the non-recrystallization rolling using the above formula is only a preferred scheme of the present application, and a determination method of a finish rolling temperature of the non-recrystallization rolling in the present application is not limited thereto, for example, in alternative embodiments, the finish rolling temperature may also be obtained based on an experience or other methods.

Preferably, when 60 mm≤t<80 mm, a reduction amount of at least two passes in the recrystallization rolling stage is ≥30 mm; when 80 mm≤t<90 mm, a reduction amount of at least two passes in the recrystallization rolling stage is ≥35 mm; when 90 mm≤t≤100 mm, a reduction amount of at least two passes in the recrystallization rolling stage is ≥38 mm.

### (5) Controlled cooling

The steel plate undergoes a water cooling, specifically using a multi-function intermittent cooling system for the water cooling, and controlling a cooling rate of the steel plate to be (28-0.24t)±1°C/s, and an outlet water temperature of the steel plate being (453-1.87t)±20°C, wherein t is a thickness of the steel plate in mm.

A chemical composition of the obtained steel plate is the same as a chemical composition of the molten steel obtained by the smelting, and will not be described in detail here.

In this way, this preferred embodiment determines a cooling rate and an outlet water temperature during the water cooling based on a target thickness of the steel plate to be prepared, thereby establishing a matching relationship between a steel plate thickness and the cooling rate, the outlet water temperature, making a cooling process control in the controlled cooling process more reasonable, further controlling a microstructure of the steel plate, and reasonably matching a strength and a toughness of the steel plate. Of course, calculating a cooling rate and an outlet water temperature during the water cooling using the above formulas is only a preferred scheme of the present application, and a determination method of the cooling rate and the outlet water temperature during the water cooling in the present application is not limited thereto, for example, in alternative embodiments, the cooling rate and the outlet water temperature may also be obtained based on an experience or other methods.

After a detection, a center segregation grade of the obtained steel plate is better than Class B 0.5 grade.

When t≤60 mm, a microstructure of the steel plate is a polygonal ferrite + a low carbon bainite, and a proportion of the low carbon bainite is 10-45%.

When t>60 mm, a microstructure of the steel plate is a quasi-polygonal ferrite + a low carbon bainite + a degenerated pearlite, a proportion of the quasi-polygonal ferrite is 5-25%, a proportion of the low carbon bainite is 70-85%, and a proportion of the degenerated pearlite is 3-13%.

A yield strength of the steel plate is ≥355 MPa, a tensile strength is 470-630 MPa, a Z-direction tensile strength is ≥450 MPa, a yield ratio is ≤0.85, a low temperature impact energy at -60°C at different positions in a thickness direction of the steel plate is all ≥250 J, a Z-direction tensile area reduction is ≥65%, and a CTOD value at -10°C is ≥1.6 mm.

After the steel plate undergoes a 5% pre-deformation treatment, or undergoes a 5% pre-deformation + an aging at (250±10)°C for 1 h, a low temperature impact toughness of the steel plate does not decrease, that is, after the steel plate undergoes a large deformation cold forming, or a large deformation cold forming + a long-time aging, the low temperature impact toughness does not decrease.

The steel plate undergoes a welding under a heat input of 7-50 kJ/cm, a low temperature impact energy at -40°C of a heat affected zone of a welded joint is ≥230 J, and a CTOD value at -10°C of a coarse-grained zone and an intercritical zone is ≥1.2 mm.

After the welding, a heat treatment at 590±10°C for not more than 6 h, a strength, a low temperature impact toughness, a CTOD fracture toughness, and Z-direction tensile properties of the steel plate all do not decrease.

### Second Embodiment

### (1) Molten steel smelting

A chemical composition of a molten steel obtained by a smelting preferred in this embodiment comprises, in percentage by mass: C 0.04-0.07%, Si 0.15-0.25%, Mn 1.45-1.55%, P≤0.015%, S≤0.003%, Cr 0.10-0.20%, Ni 0.08-0.15%, Cu 0.20-0.25%, Nb 0.03-0.04%, Ti 0.01-0.02%, Alt 0.02-0.05%, N≤0.005%, O≤0.002%, with a balance being Fe and inevitable impurities, and a strengthening equivalent Req being 0.45-0.55%.

Preferably, the molten steel smelting process comprises a converter smelting, a Ladle Furnace refining and an RH Vacuum degassing refining step performed in sequence.

### a. Converter smelting step

1.8±0.3 kg/t of a copper block and 0.85±0.1 kg/t of a nickel plate are charged into a converter together with a scrap steel and a hot metal for a smelting, and a deoxidation and an alloying are performed on the obtained molten steel. That is, steelmaking raw materials comprise the copper block, the nickel plate, the scrap steel, and the hot metal.

Wherein, a total charge of the converter is 200±2 t, a target basicity of a final slag is 4.0, a C content in the molten steel at an end of converter smelting is 0.02-0.05%, P≤0.012%, S≤0.008%, a tapping temperature is 1640±20°C, when 1/6 of the molten steel is tapped, alloys and slag materials are added in an order of ferrosilicon-metallic manganese-aluminum ingot-lime, wherein an addition amount of the aluminum ingot is (0.69+14[O]) kg/t, an addition amount of the ferrosilicon is 1.7±0.1 kg/t, an addition amount of the metallic manganese is 15±1 kg/t, and an addition amount of the lime is 4.0±0.5 kg/t.

### b. Ladle Furnace refining step

The molten steel after the converter smelting is fed into a Ladle Furnace for a chemical composition adjustment, a temperature control, and an inclusion control.

Specifically, 2.1±0.5 kg/t of a low carbon ferrochrome and 0.5±0.05 kg/t of a FeNb are added to the molten steel in the Ladle Furnace for an alloy composition adjustment, followed by adding a calcium carbide to the molten steel for a diffusion deoxidation, after a slag whitening, a deoxidation continues for more than 15 min, a sampling detection is performed and an alloy composition adjustment is conducted before leaving a station, after a chemical composition of the molten steel reaches a target range, the molten steel is maintained for at least 5 min before tapping, that is to say, an addition of smelting raw materials and auxiliary materials is prohibited for at least 5 min before an end of refining.

### c. RH Vacuum degassing refining step

This step is the same as in the first embodiment, and will not be described in detail here.

### (2) Continuous casting

This process is the same as in the first embodiment, and will not be described in detail here.

### (3) Heating

This process is the same as in the first embodiment, and will not be described in detail here.

### (4) Two-stage rolling

The only difference between this process and the first embodiment is:
a finish rolling temperature of the non-recrystallization rolling is (854-295[C]-77[Mn]-0.04t²+4.21t)±10°C.

Wherein, t is a thickness of the steel plate in mm; [C] represents a mass percentage of C in the continuous casting slab, [Mn] represents a mass percentage of Mn in the continuous casting slab, and so on in the following text.

Except for the above difference, this process is no different from the first embodiment, and will not be described in detail here.

### (5) Controlled cooling

The steel plate undergoes a water cooling, specifically using a multi-function intermittent cooling system for the water cooling, and controlling a cooling rate of the steel plate to be (23+0.002t²-0.33t)±1°C/s, and an outlet water temperature of the steel plate being (0.00236³-0.48t²+28.3t)±20°C, wherein t is a thickness of the steel plate in mm.

A chemical composition of the obtained steel plate is the same as a chemical composition of the molten steel obtained by the smelting, and will not be described in detail here.

In this way, this preferred embodiment determines a cooling rate and an outlet water temperature during the water cooling based on a target thickness of the steel plate to be prepared, thereby establishing a matching relationship between a steel plate thickness and the cooling rate, the outlet water temperature, making a cooling process control in the controlled cooling process more reasonable, further controlling a microstructure of the steel plate, and reasonably matching a strength and a toughness of the steel plate. Of course, calculating a cooling rate and an outlet water temperature during the water cooling using the above formulas is only a preferred scheme of the present application, and a determination method of the cooling rate and the outlet water temperature during the water cooling in the present application is not limited thereto, for example, in alternative embodiments, the cooling rate and the outlet water temperature may also be obtained based on an experience or other methods.

After a detection, a center segregation grade of the obtained steel plate is better than Class B 0.5 grade.

A microstructure of the steel plate is a quasi-polygonal ferrite + a low carbon bainite, and a proportion of the low carbon bainite is 35-80%.

A yield strength of the steel plate is ≥420 MPa, a tensile strength is 500-640 MPa, a Z-direction tensile strength is ≥475 MPa, a yield ratio is ≤0.85, a low temperature impact energy at -60°C at different positions in a thickness direction of the steel plate is all ≥250 J, a Z-direction tensile area reduction is ≥65%, and a CTOD value at -10°C is ≥1.3 mm.

After the steel plate undergoes a 5% pre-deformation treatment, or undergoes a 5% pre-deformation + an aging at (250±10)°C for 1 h, a low temperature impact toughness of the steel plate does not decrease, that is, after the steel plate undergoes a large deformation cold forming, or a large deformation cold forming + a long-time aging, the low temperature impact toughness does not decrease.

The steel plate undergoes a welding under a heat input of 7-50 kJ/cm, a low temperature impact energy at -40°C of a heat affected zone of a welded joint is ≥150 J, and a CTOD value at -10°C of a coarse-grained zone and an intercritical zone is ≥1.0 mm.

After the welding, a heat treatment at 590±10°C for not more than 6 h, a strength, a low temperature impact toughness, a CTOD fracture toughness, and Z-direction tensile properties of the steel plate all do not decrease.

### Third Embodiment

### (1) Molten steel smelting

A chemical composition of a molten steel obtained by a smelting preferred in this embodiment comprises, in percentage by mass: C 0.03-0.06%, Si 0.15-0.25%, Mn 1.43-1.53%, P≤0.015%, S≤0.003%, Cr 0.15-0.25%, Ni 0.13-0.23%, Cu 0.13-0.22%, Mo 0.07-0.15%, Nb 0.025-0.035%, Ti 0.01-0.02%, Alt 0.02-0.05%, N≤0.005%, O≤0.002%, with a balance being Fe and inevitable impurities, and a strengthening equivalent Req being 0.47-0.57%.

Preferably, the molten steel smelting process comprises a converter smelting, a Ladle Furnace refining and an RH Vacuum degassing refining step performed in sequence.

### a. Converter smelting step

1.4±0.3 kg/t of a copper block, 1.4±0.3 kg/t of a nickel plate, and 1.4±0.3 kg/t of a ferromolybdenum are charged into a converter together with a scrap steel and a hot metal for a smelting, and a deoxidation and an alloying are performed on the obtained molten steel. That is, steelmaking raw materials comprise the copper block, the nickel plate, the ferromolybdenum, the scrap steel, and the hot metal.

Wherein, a total charge of the converter is 200±2 t, a target basicity of a final slag is 4.0, a C content in the molten steel at an end of converter smelting is 0.02-0.06%, P≤0.012%, S≤0.008%, a tapping temperature is 1640±20°C, when 1/6 of the molten steel is tapped, alloys and slag materials are added in an order of ferrosilicon-metallic manganese-aluminum ingot-lime, wherein an addition amount of the aluminum ingot is (0.69+14[O]) kg/t, an addition amount of the ferrosilicon is 2.5±0.3 kg/t, an addition amount of the metallic manganese is 12±2 kg/t, and an addition amount of the lime is 3+1 kg/t.

### b. Ladle Furnace refining step

The molten steel after the converter smelting is fed into a Ladle Furnace for a chemical composition adjustment, a temperature control, and an inclusion control.

Specifically, 2.7±0.5 kg/t of a low carbon ferrochrome and 0.4±0.1 kg/t of a FeNb are added to the molten steel in the Ladle Furnace for an alloy composition adjustment, followed by adding a calcium carbide to the molten steel for a diffusion deoxidation, after a slag whitening, a deoxidation continues for more than 15 min, a sampling detection is performed and an alloy composition adjustment is conducted before leaving a station, after a chemical composition of the molten steel reaches a target range, the molten steel is maintained for at least 5 min before tapping, that is to say, an addition of smelting raw materials and auxiliary materials is prohibited for at least 5 min before an end of refining.

### c. RH Vacuum degassing refining step

This step is the same as in the first embodiment, and will not be described in detail here.

### (2) Continuous casting

This process is the same as in the first embodiment, and will not be described in detail here.

### (3) Heating

This process is the same as in the first embodiment, and will not be described in detail here.

### (4) Two-stage rolling

The only difference between this process and the first embodiment is:
a finish rolling temperature of the non-recrystallization rolling is (955-295[C]-77[Mn]-82[Mo]-0.002t²-0.24t)±10°C.

Wherein, t is a thickness of the steel plate in mm, [C] represents a mass percentage of C in the continuous casting slab, [Mn] represents a mass percentage of Mn in the continuous casting slab, [Mo] represents a mass percentage of Mo in the continuous casting slab, and so on in the following text.

Except for the above difference, this process is no different from the first embodiment, and will not be described in detail here.

### (5) Controlled cooling

The steel plate undergoes a water cooling, specifically using a multi-function intermittent cooling system for the water cooling, and controlling a cooling rate of the steel plate to be (19-0.13t)±1°C/s, and an outlet water temperature of the steel plate being (560+0.02t²-4.5t)±20°C, wherein t is a thickness of the steel plate in mm.

A chemical composition of the obtained steel plate is the same as a chemical composition of the molten steel obtained by the smelting, and will not be described in detail here.

In this way, this preferred embodiment determines a cooling rate and an outlet water temperature during the water cooling based on a target thickness of the steel plate to be prepared, thereby establishing a matching relationship between a steel plate thickness and the cooling rate, the outlet water temperature, making a cooling process control in the controlled cooling process more reasonable, further controlling a microstructure of the steel plate, and reasonably matching a strength and a toughness of the steel plate. Of course, calculating a cooling rate and an outlet water temperature during the water cooling using the above formulas is only a preferred scheme of the present application, and a determination method of the cooling rate and the outlet water temperature during the water cooling in the present application is not limited thereto, for example, in alternative embodiments, the cooling rate and the outlet water temperature may also be obtained based on an experience or other methods.

After a detection, a center segregation grade of the obtained steel plate is better than Class B 0.5 grade.

A microstructure of the steel plate is a quasi-polygonal ferrite + a low carbon bainite, a proportion of the low carbon bainite is 65-90%, and an average grain size of the quasi-polygonal ferrite is 4-9 µm.

A yield strength of the steel plate is ≥460 MPa, a tensile strength is 520-675 MPa, a Z-direction tensile strength is ≥495 MPa, a yield ratio is ≤0.85, a low temperature impact energy at -60°C at different positions in a thickness direction of the steel plate is all ≥250 J, a Z-direction tensile area reduction is ≥65%, and a CTOD value at -10°C is ≥1.1 mm.

After the steel plate undergoes a 5% pre-deformation treatment, or undergoes a 5% pre-deformation + an aging at (250±10)°C for 1 h, a low temperature impact toughness of the steel plate does not decrease, that is, after the steel plate undergoes a large deformation cold forming, or a large deformation cold forming + a long-time aging, the low temperature impact toughness does not decrease.

The steel plate undergoes a welding under a heat input of 7-50 kJ/cm, a low temperature impact energy at -40°C of a heat affected zone of a welded joint is ≥150 J, and a CTOD value at -10°C of a coarse-grained zone and an intercritical zone is ≥0.8 mm.

After the welding, a heat treatment at 590±10°C for not more than 6 h, a strength, a low temperature impact toughness, a CTOD fracture toughness, and Z-direction tensile properties of the steel plate all do not decrease.

To make the objectives, technical schemes and advantages of one embodiment of the present application clearer, the present embodiment will be further illustrated below in combination with Examples 1-12 according to one embodiment of the present application. Obviously, the described Examples 1-12 are part of the embodiments of the present application, rather than all embodiments. Other embodiments based on the aforementioned embodiments do not depart from the technical spirit of the present application.

Specifically, Examples 1-12 all provide a high fracture toughness steel plate, the chemical composition of which is shown in Table 1, with the remainder being Fe and inevitable impurities.

**Table 1**

| Example | Chemical composition in percentage by mass(wt,%) | | | | | | | | | | | | | |
|---|---|---|---|---|---|---|---|---|---|---|---|---|---|---|
| | C | Si | Mn | P | S | Cr | Ni | Cu | Mo | Nb | Ti | Alt | N | O |
| 1 | 0.04 | 0.16 | 1.47 | 0.013 | 0.002 | 0.07 | - | 0.16 | - | 0.025 | 0.015 | 0.035 | 0.0037 | 0.0012 |
| 2 | 0.05 | 0.24 | 1.52 | 0.014 | 0.002 | 0.09 | - | 0.19 | - | 0.024 | 0.014 | 0.034 | 0.0039 | 0.0014 |
| 3 | 0.05 | 0.21 | 1.51 | 0.012 | 0.001 | 0.12 | - | 0.21 | - | 0.026 | 0.013 | 0.032 | 0.0031 | 0.0011 |
| 4 | 0.06 | 0.22 | 1.53 | 0.012 | 0.002 | 0.11 | - | 0.22 | - | 0.022 | 0.015 | 0.033 | 0.0025 | 0.0013 |
| 5 | 0.04 | 0.21 | 1.47 | 0.011 | 0.002 | 0.15 | 0.08 | 0.22 | - | 0.033 | 0.014 | 0.033 | 0.0035 | 0.0012 |
| 6 | 0.05 | 0.19 | 1.49 | 0.010 | 0.002 | 0.14 | 0.12 | 0.23 | - | 0.034 | 0.012 | 0.035 | 0.0029 | 0.0014 |
| 7 | 0.05 | 0.2 | 1.52 | 0.011 | 0.002 | 0.17 | 0.1 | 0.21 | - | 0.035 | 0.015 | 0.037 | 0.0033 | 0.0017 |
| 8 | 0.07 | 0.21 | 1.51 | 0.009 | 0.003 | 0.16 | 0.13 | 0.23 | - | 0.033 | 0.013 | 0.031 | 0.0029 | 0.0015 |
| 9 | 0.035 | 0.22 | 1.47 | 0.011 | 0.002 | 0.21 | 0.17 | 0.18 | 0.08 | 0.027 | 0.015 | 0.033 | 0.0025 | 0.0013 |
| 10 | 0.04 | 0.16 | 1.49 | 0.013 | 0.003 | 0.17 | 0.16 | 0.19 | 0.09 | 0.031 | 0.014 | 0.035 | 0.0021 | 0.0015 |
| 11 | 0.045 | 0.23 | 1.49 | 0.010 | 0.002 | 0.19 | 0.15 | 0.15 | 0.12 | 0.029 | 0.013 | 0.038 | 0.0022 | 0.0015 |
| 12 | 0.052 | 0.22 | 1.5 | 0.012 | 0.003 | 0.21 | 0.19 | 0.14 | 0.13 | 0.032 | 0.015 | 0.039 | 0.0034 | 0.0014 |

The production methods for the high fracture toughness steel plates in Examples 1-12 are specifically as follows.

### (1) Molten steel smelting

Chemical compositions of a molten steel obtained by a smelting are shown in Table 1.

### a. Converter smelting step

Smelting raw materials are charged into a converter for a smelting, and a deoxidation and an alloying are performed on the obtained molten steel. The steelmaking raw materials comprise a scrap steel, a hot metal, and at least one of a copper block, a nickel plate, and a ferromolybdenum. Wherein, a total charge of the converter is 200±2 t, addition amounts of the smelting raw materials are shown in Table 2; a target basicity of a final slag is 4.0, contents of C, P, S in the molten steel at an end of converter smelting are shown in Table 2, and a tapping temperature is 1640±20°C. When 1/6 of the molten steel is tapped, alloys and slag materials are added in an order of ferrosilicon-metallic manganese-aluminum ingot-lime, wherein addition amounts of an aluminum ingot, a ferrosilicon, a metallic manganese, and a lime are shown in Table 2 respectively.

**Table 2**

| Example | Addition amount of raw materials(kg/t) | | | Content in the molten steel at an end of converter smelting(%) | | | Addition amount of alloys and slag materials(kg/t) | | | |
|---|---|---|---|---|---|---|---|---|---|---|
| | Copper block | Nickel plate | Ferromolybdenum | C | P | S | Aluminum ingot | Ferrosilicon | Metallic manganese | Lime |
| 1 | 1.63 | - | - | 0.039 | 0.010 | 0.006 | 1.52 | 1.37 | 10.9 | 2.7 |
| 2 | 1.88 | - | - | 0.037 | 0.011 | 0.005 | 1.69 | 1.63 | 12.4 | 2.9 |
| 3 | 2.01 | - | - | 0.041 | 0.009 | 0.006 | 1.59 | 1.59 | 11.9 | 3.2 |
| 4 | 2.07 | - | - | 0.049 | 0.009 | 0.006 | 1.55 | 1.71 | 12.5 | 3.1 |
| 5 | 1.98 | 0.79 | - | 0.027 | 0.008 | 0.005 | 1.61 | 1.74 | 14.6 | 3.7 |
| 6 | 2.04 | 0.93 | - | 0.031 | 0.009 | 0.004 | 1.73 | 1.69 | 15.1 | 3.9 |
| 7 | 1.95 | 0.82 | - | 0.035 | 0.007 | 0.005 | 1.65 | 1.65 | 15.3 | 4.1 |
| 8 | 2.06 | 0.91 | - | 0.041 | 0.009 | 0.004 | 1.59 | 1.72 | 14.9 | 3.8 |
| 9 | 1.68 | 1.51 | 1.15 | 0.052 | 0.007 | 0.004 | 1.49 | 2.53 | 11.5 | 3.5 |
| 10 | 1.65 | 1.42 | 1.21 | 0.041 | 0.008 | 0.004 | 1.51 | 2.31 | 12.1 | 2.9 |
| 11 | 1.43 | 1.39 | 1.39 | 0.037 | 0.011 | 0.007 | 1.66 | 2.62 | 12.5 | 3.1 |
| 12 | 1.37 | 1.65 | 1.47 | 0.037 | 0.008 | 0.006 | 1.58 | 2.59 | 12.4 | 3.4 |

### b. Ladle Furnace refining step

The molten steel after the converter smelting is fed into a Ladle Furnace for a chemical composition adjustment, a temperature control, and an inclusion control. A low carbon ferrochrome and a FeNb are added to the molten steel in the Ladle Furnace for an alloy composition adjustment, and addition amounts of the low carbon ferrochrome and the FeNb are shown in Table 3. Thereafter, a calcium carbide is added to the molten steel for a diffusion deoxidation, after a slag whitening, a deoxidation continues, and a deoxidation time is shown in Table 3; a sampling detection is performed and an alloy composition adjustment is conducted before leaving a station, after a chemical composition of the molten steel reaches a target range, the molten steel is maintained for at least 5 min before tapping.

### c. RH Vacuum degassing refining step

An RH circulation degassing equipment is used to perform a vacuum degassing and an inclusion removal treatment on the molten steel after the Ladle Furnace refining, and then a silicon-calcium cored wire is fed into the molten steel for an inclusion modification and a soft stirring treatment.

Specifically, 0.5+0.05 kg/t of a ferrotitanium is added to the molten steel, followed by subjecting the molten steel to a vacuum degassing and an inclusion removal treatment, controlling a vacuum degree to be <2 mBar and a degassing time to be ≥10 min; thereafter, 140±5 m of a silicon-calcium cored wire is fed into the molten steel for an inclusion modification and a soft stirring treatment, a wire feeding speed of the silicon-calcium cored wire being 1.5±0.5 m/s, a soft stirring time being shown in Table 3, controlling a slag surface fluctuation without exposing the molten steel.

**Table 3**

| Example | Addition amount of low carbon ferrochrome(kg/t) | Addition amount of FeNb(kg/t) | Deoxidation time(min) | Soft stirring time(min) |
|---|---|---|---|---|
| 1 | 0.82 | 0.31 | 17 | 15 |
| 2 | 0.88 | 0.33 | 18 | 14 |
| 3 | 0.97 | 0.29 | 16 | 16 |
| 4 | 1.01 | 0.27 | 17 | 13 |
| 5 | 1.99 | 0.51 | 17 | 14 |
| 6 | 2.04 | 0.50 | 16 | 15 |
| 7 | 2.21 | 0.53 | 18 | 13 |
| 8 | 2.19 | 0.49 | 17 | 15 |
| 9 | 2.79 | 0.37 | 19 | 18 |
| 10 | 2.53 | 0.41 | 17 | 20 |
| 11 | 2.59 | 0.38 | 16 | 20 |
| 12 | 2.71 | 0.43 | 16 | 15 |

### (2) Continuous casting

The molten steel obtained from the molten steel smelting process is continuously cast into a continuous casting slab with a thickness of 320 mm, and chemical compositions of the continuous casting slab are shown in Table 1. During a continuous casting, a mold level fluctuation amplitude is controlled within a range of ±2 mm, an inlet water temperature of a mold is 28-35°C, an inlet-outlet water temperature difference is 4-10°C, a narrow face water flow rate is 550±50 L/min, a wide face water flow rate is 3800±200 L/min, a casting speed is 0.6±0.05 m/min, and a total reduction at a solidification end is 5-6 mm.

The continuous casting slabs of Examples 1-12 are sampled and tested according to GB/T 226-2015 and subjected to a cold acid etching, with a specimen direction being transverse, and a continuous casting slab low-magnification structure defect grading is performed according to YB/T 4003-2016.

After a detection, center segregation grades of the continuous casting slabs of Examples 1-12 are all better than Class B 1.0 grade, the continuous casting slabs all have no center porosity, and crack grades are all better than 1.0 grade.

### (3) Heating

The continuous casting slabs are heated, and a soaking stage temperature and a soaking time are shown in Table 4.

### (4) Two-stage rolling

First subjecting the continuous casting slabs to a recrystallization rolling to obtain an intermediate slab, and then subjecting the intermediate slab to a non-recrystallization rolling to produce a steel plate, when 60 mm≤t<80 mm, a reduction amount of at least two passes in the recrystallization rolling stage is ≥30 mm; when 80 mm≤t<90 mm, a reduction amount of at least two passes in the recrystallization rolling stage is ≥35 mm; when 90 mm≤t≤100 mm, a reduction amount of at least two passes in the recrystallization rolling stage is ≥38 mm.

A thickness T of the intermediate slab, a thickness t of the steel plate, and a finish rolling temperature of the non-recrystallization rolling are shown in Table 4.

### (5) Controlled cooling

A multi-function intermittent cooling system is used to perform a water cooling on the steel plates, and a cooling rate and an outlet water temperature of the steel plates are shown in Table 4.

**Table 4**

| Example | Soaking stage temperature(°C) | Soaking time(min) | Thickness T of the intermediate slab(mm) | Thickness t of the steel plate(mm) | Finish rolling temperature(°C) | Cooling rate(°C/s) | Outlet water temperature(°C) |
|---|---|---|---|---|---|---|---|
| 1 | 1137 | 462 | 65 | 13 | 839 | 25.6 | 416 |
| 2 | 1141 | 375 | 80 | 25 | 821 | 22.9 | 397 |
| 3 | 1208 | 466 | 180 | 75 | 805 | 10.2 | 297 |
| 4 | 1140 | 533 | 170 | 100 | 774 | 4.1 | 254 |
| 5 | 1162 | 495 | 60 | 10 | 775 | 20.1 | 257 |
| 6 | 1193 | 387 | 90 | 30 | 821 | 14.7 | 493 |
| 7 | 1189 | 554 | 180 | 70 | 816 | 9.4 | 410 |
| 8 | 1219 | 469 | 170 | 100 | 745 | 9 | 328 |
| 9 | 1173 | 466 | 65 | 15 | 825 | 16.6 | 488 |
| 10 | 1162 | 368 | 90 | 30 | 816 | 14.3 | 442 |
| 11 | 1181 | 414 | 170 | 85 | 785 | 8.1 | 332 |
| 12 | 1143 | 547 | 170 | 100 | 774 | 5 | 325 |

For the steel plates of Examples 1-12, a sampling is performed according to the same test methods and a metallographic structure detection, a center segregation testing, a mechanical property testing and a welding performance testing are conducted, and specific test methods and detection results are as follows:

### (1) In terms of metallographic structure

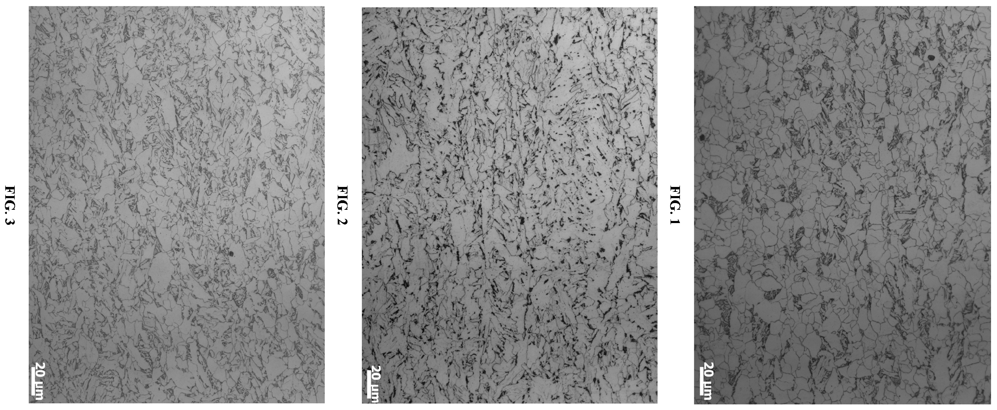

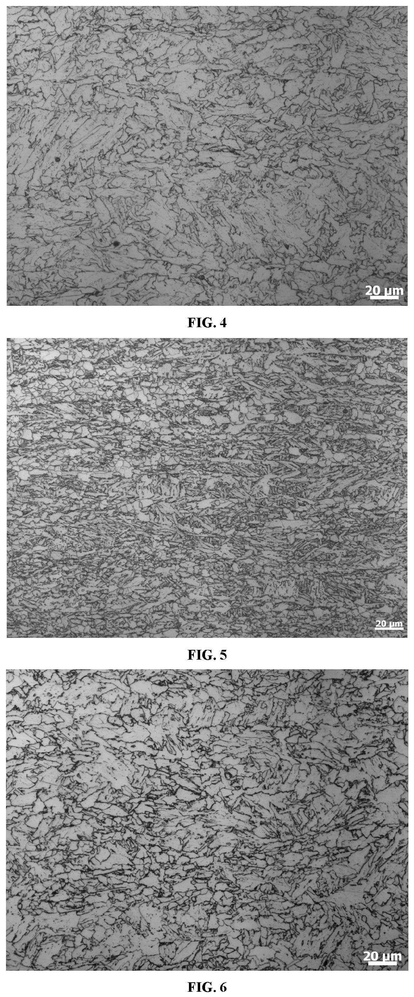

15×15 cm specimens are taken from a head of each steel plate respectively, metallographic samples are prepared along a rolling direction, after a mechanical polishing and a nitric acid alcohol etching, a microstructure observation is conducted under a metallographic microscope, and average grain sizes of a quasi-polygonal ferrite in Examples 9-12 are measured according to GB/T 6394-2017, microstructures and proportions of each microstructure phase, grain sizes of the steel plates in Examples 1-12 are shown in Table 5 respectively, and metallographic structure images of the steel plates in Examples 1, 4, 5, 8, 9, 12 are shown in Figures 1-6 respectively, wherein metallographic structure images of steel plates with a minimum thickness and a maximum thickness are selected from the three preferred embodiments for display respectively, which can characterize metallographic structure conditions of steel plates in each preferred embodiment, and other examples are omitted.

**Table 5**

| Example | Microstructure | | | | Average grain size of a quasi-polygonal ferrite(µm) |
|---|---|---|---|---|---|
| | Polygonal ferrite(%) | Low carbon bainite(%) | Quasi-polygonal ferrite(%) | Degenerated pearlite(%) | |
| 1 | 85+2 | 15±2 | / | / | / |
| 2 | 69+2 | 31±2 | / | / | / |
| 3 | / | 81±2 | 12±2 | 7±1 | / |
| 4 | / | 81±2 | 14±2 | 5±1 | / |
| 5 | / | 62+2 | 3 8±2 | / | / |
| 6 | / | 68+2 | 32±2 | / | / |
| 7 | / | 78±2 | 22±2 | / | / |
| 8 | / | 74±2 | 26±2 | / | / |
| 9 | / | 85+2 | 15±2 | / | 5±1 |
| 10 | / | 69+2 | 31±2 | / | 6±1 |
| 11 | / | 77±2 | 28±2 | / | 6±1 |
| 12 | / | 74±2 | 26±2 | / | 8±1 |

### (2) In terms of center segregation

A sampling detection and a cold acid etching are performed on the steel plates of Examples 1-12 with reference to GB/T 226-2015, with a specimen direction being transverse, and a low-magnification structure defect grading is performed according to YB/T 4003-2016.

Center segregation grades of the steel plates in Examples 1-12 are all measured to be Class A 1.0 grade.

### (3) In terms of mechanical properties

Tensile properties of the steel plates in the above examples are tested with reference to GB/T 228.1-2021 standard, Z-direction tensile properties of the steel plates in the above examples are tested with reference to GB/T 5313-2010 standard, and test results are shown in Table 6.

With reference to standard ISO 12135:2021, crack tip opening displacement CTOD characteristic values of the steel plates at -10°C are tested using a three-point bending test, and test results are shown in Table 6.

Wherein, Z-direction tensile properties of steel plates with a thickness of 16 mm and below are usually good, and specimens are difficult to process, so Z-direction tensile properties of steel plates with a thickness of 16 mm and below do not need to be tested; CTOD characteristic values and welding properties of thin specification steel plates are usually superior, therefore a CTOD characteristic value testing and a welding property testing are only performed on thick steel plates.

**Table 6**

| Example | Tensile properties | | | Z-direction | | CTOD value at - 10°C(mm) |
|---|---|---|---|---|---|---|
| | Yield strength (MPa) | Tensile strength(MPa) | Yield ratio | Tensile area reduction(%) | Tensile strength (MPa) | |
| 1 | 391 | 514 | 0.76 | - | - | - |
| 2 | 386 | 544 | 0.71 | 81,73,78 | 536,540,536 | - |
| 3 | 407 | 562 | 0.72 | 78,81,77 | 555,549,551 | - |
| 4 | 425 | 531 | 0.80 | 70,70,66 | 521,530,526 | 1.66,1.77,1.64 |
| 5 | 447 | 572 | 0.78 | - | - | - |
| 6 | 459 | 592 | 0.78 | 79,76,81 | 580,579,572 | - |
| 7 | 461 | 587 | 0.79 | 74,77,75 | 575,578,582 | - |
| 8 | 447 | 557 | 0.80 | 73,75,77 | 537,540,540 | 1.39,1.42,1.37 |
| 9 | 488 | 629 | 0.78 | - | - | - |
| 10 | 479 | 611 | 0.78 | 75,81,72 | 574,577,572 | - |
| 11 | 492 | 609 | 0.81 | 75,72,79 | 581,579,577 | - |
| 12 | 488 | 596 | 0.82 | 70,70,71 | 577,573,572 | 1.51,1.27,1.14 |

### (4) In terms of impact properties

An impact property testing at -60°C is performed on steel plates of each example with reference to GB/T 229-2020, and a low temperature impact energy at -60°C at a near-surface and a 1/2 thickness of the steel plates is shown in Table 7.

A strain aging treatment is performed on steel plates of each example with reference to GB/T 4160-2004, the steel plates of each example are subjected to a 5% pre-deformation treatment, a 5% pre-deformation and an aging treatment at 250±10°C for 1 h respectively, followed by an impact property testing at -60°C, obtaining a low temperature impact energy at -60°C at a near-surface and a 1/2 thickness of the steel plates as shown in Table 7.

**Table 7**

| Example | Low temperature impact energy at -60°C(J) | | | |
|---|---|---|---|---|
| | At a near-surface of the steel plate | At a 1/2 thickness of the steel plate | Steel plate subjected to a 5% pre-deformation treatment | Steel plate subjected to a 5% pre-deformation treatment and an aging treatment at 250±10°C for 1 h |
| 1 | - | 336,348,346 | 335,331,334 | 343,343,335 |
| 2 | 345,358,359 | 332,338,342 | 339,345,353 | 340,342,334 |
| 3 | 327,333,352 | 341,326,358 | 332,357,354 | 333,334,358 |
| 4 | 355,339,340 | 346,338,343 | 346,345,354 | 339,339,358 |
| 5 | 252,267,273 | 263,271,266 | 259,264,267 | 252,267,273 |
| 6 | 364,333,358 | 361,339,347 | 352,363,367 | 364,333,358 |
| 7 | 371,382,379 | 339,327,341 | 351,342,329 | 371,382,379 |
| 8 | 285,296,331 | 352,371,339 | 361,355,372 | 285,296,331 |
| 9 | 345,328,330 | 338,332,332 | 345,328,330 | 338,332,332 |
| 10 | 349,348,332 | 346,344,339 | 349,348,332 | 346,344,339 |
| 11 | 349,357,326 | 359,352,342 | 349,357,326 | 359,352,342 |
| 12 | 334,326,346 | 336,347,357 | 334,326,346 | 336,347,357 |

From Tables 6-7, it can be seen that a yield ratio of the steel plates is ≤0.85, a low temperature impact energy at -60°C at different positions in a thickness direction is all ≥250 J, a Z-direction tensile area reduction is ≥65%, and a CTOD value at -10°C is ≥1.1 mm. Further, after the steel plates undergo a 5% pre-deformation treatment, or undergo a 5% pre-deformation + an aging at (250±10)°C for 1 h, a low temperature impact toughness of the steel plates does not decrease, that is, after the steel plates undergo a large deformation cold forming, or a large deformation cold forming + a long-time aging, the low temperature impact toughness does not decrease.

Further, the steel plates of Examples 4, 8, and 12 are subjected to a gas-shielded welding under a heat input of 7 kJ/cm and a submerged arc welding under a heat input of 50 kJ/cm respectively, followed by a performance testing, specifically as follows.
(1) An impact property testing is performed on welded joints cooled to a room temperature after a welding with reference to GB/T 2650-2008, obtaining low temperature impact property detection results at -40°C at a near-surface and a 1/2 thickness of heat affected zones of the welded joints as shown in Table 8, wherein a low temperature impact energy kV2 at -40°C is detected with impact notch positions at a fusion line FL, 2 mm outside the fusion line (i.e., FL+2), and 5 mm outside the fusion line (i.e., FL+5) respectively, and three sampling detection results are shown for each detection position.

**Table 8**

| Example | Welding method | Low temperature impact energy at -40°C at a near-surface of heat affected zone of the welded joint(J) | | | Low temperature impact energy at - 40°C at a 1/2 thickness of heat affected zone of the welded joint(J) | | |
|---|---|---|---|---|---|---|---|
| | | FL | FL+2 | FL+5 | FL | FL+2 | FL+5 |
| 4 | Gas-shielded welding | 259,278,272 | 294,287,322 | 289,329,312 | 282,301,243 | 295,326,277 | 313,294,308 |
| | Submerged arc welding | 275,257,253 | 281,329,297 | 304,290,298 | 274,231,249 | 302,312,282 | 290,312,286 |
| 8 | Gas-shielded welding | 168,243,190 | 217,191,191 | 298,220,309 | 334,298,255 | 195,268,286 | 307,207,311 |
| | Submerged arc welding | 170,184,195 | 294,247,239 | 210,190,280 | 185,213,245 | 183,223,231 | 199,217,228 |
| 12 | Gas-shielded welding | 159,159,204 | 244,286,243 | 315,251,229 | 159,174,193 | 206,266,243 | 248,235,309 |
| | Submerged arc welding | 193,192,159 | 264,259,248 | 265,259,219 | 193,160,166 | 232,206,241 | 208,300,288 |

(2) With reference to standard ISO 15653:2018, crack tip opening displacement CTOD characteristic values at - 10°C of the welded joints are detected using a three-point bending test, with notch positions located at a coarse-grained zone (i.e., GCHAZ) and an intercritical zone (i.e., a SCHAZ/ICHAZ boundary zone) of a welding heat affected zone respectively, three sampling detection results are shown for each detection position, and detection results are shown in Table 9.

**Table 9**

| Example | Welding method | CTOD value at -10°C(mm) | |
|---|---|---|---|
| | | GCHAZ | SCHAZ/ICHAZ boundary zone |
| 4 | Gas-shielded welding | 1.48, 1.39, 1.59 | 1.27, 1.41, 1.23 |
| | Submerged arc welding | 1.34, 1.26, 1.23 | 1.36, 1.50, 1.31 |
| 8 | Gas-shielded welding | 1.23, 1.14, 1.28 | 1.04, 1.03, 1.07 |
| | Submerged arc welding | 1.15, 1.01, 1.23 | 1.19, 1.12, 1.21 |
| 12 | Gas-shielded welding | 0.95, 0.98, 0.83 | 0.80, 0.90, 0.85 |
| | Submerged arc welding | 0.86, 0.85, 1.05 | 1.23, 0.90, 1.06 |

From Tables 8-9, it can be seen that when the steel plates undergo a welding under a heat input of 7-50 kJ/cm, a low temperature impact energy at -40°C of heat affected zones of the welded joints is ≥150 J, and CTOD values at - 10°C of coarse-grained zones and intercritical zones are ≥0.8 mm.

A post-weld heat treatment is further performed on the steel plates after the welding, with a heat treatment temperature of 590°C and a heat treatment time of 6 h, followed by a performance testing, specifically as follows.

### (1) In terms of mechanical properties

Tensile properties of the steel plates after the post-weld heat treatment are tested with reference to GB/T 228.1-2021 standard, Z-direction tensile properties of the steel plates after the post-weld heat treatment are tested with reference to GB/T 5313-2010 standard, and test results are shown in Table 10;

With reference to standard ISO 12135:2021, crack tip opening displacement CTOD characteristic values at -10°C of the steel plates after the post-weld heat treatment are tested using a three-point bending test, and test results are shown in Table 10.

**Table 10**

| Example | Tensile properties | | | Z-direction | | CTOD value at - 10°C(mm) |
|---|---|---|---|---|---|---|
| | Yield strength (MPa) | Tensile strength(MPa) | Yield ratio | Tensile area reduction(%) | Tensile strength (MPa) | |
| 4 | 431 | 533 | 0.81 | 71,68,68 | 528,527,524 | 1.64,1.59,1.75 |
| 8 | 451 | 549 | 0.82 | 74,75,75 | 540,536,544 | 1.03,1.44,1.39 |
| 12 | 497 | 591 | 0.84 | 71,70,66 | 580,572,577 | 1.37,1.14,1.43 |

### (2) In terms of impact properties

An impact property testing at -60°C is performed on the steel plates after the post-weld heat treatment with reference to GB/T 229-2020, and a low temperature impact energy at -60°C at a near-surface and a 1/2 thickness of the steel plates is shown in Table 11.

A strain aging treatment is performed on the steel plates after the post-weld heat treatment with reference to GB/T 4160-2004, with a 5% pre-deformation treatment, a 5% pre-deformation and an aging treatment at 250±10°C for 1 h respectively, followed by an impact property testing at -60°C, and results are shown in Table 11.

**Table 11**

| Example | Low temperature impact energy at -60°C(J) | | | |
|---|---|---|---|---|
| | At a near-surface of the steel plate | At a 1/2 thickness of the steel plate | Steel plate subjected to a 5% pre-deformation treatment | Steel plate subjected to a 5% pre-deformation treatment and an aging treatment at 250±10°C for 1 h |
| 4 | 357,328,338 | 359,329,351 | 338,332,338 | 329,330,351 |
| 8 | 363,351,365 | 333,332,297 | 335,341,339 | 337,349,351 |
| 12 | 346,335,338 | 344,347,327 | 348,352,354 | 351,340,342 |

(3) An impact property testing is performed on the welded joints after the post-weld heat treatment respectively with reference to GB/T 2650-2008, obtaining low temperature impact property detection results at -40°C at a near-surface and a 1/2 thickness of heat affected zones of the welded joints as shown in Table 12, wherein a low temperature impact energy kV2 at -40°C is detected with impact notch positions at a fusion line FL, 2 mm outside the fusion line (i.e., FL+2), and 5 mm outside the fusion line (i.e., FL+5) respectively, and three sampling detection results are shown for each detection position.

**Table 12**

| Example | Welding method | Low temperature impact energy at -40°C at a near-surface of heat affected zone of the welded joint(J) | | | Low temperature impact energy at -40°C at a 1/2 thickness of heat affected zone of the welded joint(J) | | |
|---|---|---|---|---|---|---|---|
| | | FL | FL+2 | FL+5 | FL | FL+2 | FL+5 |
| 4 | Gas-shielded welding | 270,291,281 | 293,312,321 | 328,290,298 | 264,279,236 | 286,309,316 | 309,288,297 |
| | Submerged arc welding | 243,264,297 | 287,325,322 | 299,311,316 | 256,304,266 | 279,306,315 | 308,303,329 |
| 8 | Gas-shielded welding | 199,201,209 | 247,251,236 | 294,285,301 | 277,258,251 | 235,255,271 | 295,307,299 |
| | Submerged arc welding | 181,158,175 | 207,251,303 | 267,272,281 | 233,223,213 | 197,215,168 | 260,215,182 |
| 12 | Gas-shielded welding | 164,201,204 | 242,222,233 | 265,215,301 | 186,192,176 | 226,273,190 | 250,262,214 |
| | Submerged arc welding | 204,181,163 | 195,203,293 | 293,241,246 | 175,197,181 | 238,200,256 | 221,248,213 |

(4) With reference to standard ISO 15653:2018, crack tip opening displacement CTOD characteristic values at - 10°C of the welded joints of the steel plates after the post-weld heat treatment are detected using a three-point bending test, with notch positions located at a coarse-grained zone (i.e., GCHAZ) and an intercritical zone (i.e., a SCHAZ/ICHAZ boundary zone) of a welding heat affected zone respectively, three sampling detection results are shown for each detection position, and detection results are shown in Table 13.

**Table 13**

| Example | Welding method | CTOD value at -10°C(mm) | |
|---|---|---|---|
| | | GCHAZ | SCHAZ/ICHAZ boundary zone |
| 4 | Gas-shielded welding | 1.34, 1.39, 1.65 | 1.49, 1.65, 1.59 |
| | Submerged arc welding | 1.26,1.43,1.31 | 1.21, 1.40, 1.46 |
| 8 | Gas-shielded welding | 1.19, 1.16, 1.29 | 1.07, 1.16, 1.39 |
| | Submerged arc welding | 1.00, 1.19, 1.01 | 1.27, 1.20, 1.20 |
| 12 | Gas-shielded welding | 0.91, 0.88, 0.81 | 1.05, 0.94, 0.87 |
| | Submerged arc welding | 0.82, 0.90, 1.18 | 0.85, 1.04, 0.90 |

From Tables 10-13, it can be seen that after the welding, a heat treatment at 590±10°C for not more than 6 h, a strength, a low temperature impact toughness, a CTOD fracture toughness, and Z-direction tensile properties of the steel plates all do not decrease.

It should be understood that although this specification is described according to embodiments, not every embodiment contains only one independent technical solution. The narrative manner of the specification is only for clarity. Those skilled in the art should regard the specification as a whole, and technical solutions in various embodiments may also be appropriately combined to form other embodiments understandable by those skilled in the art.

The detailed descriptions listed above are merely specific descriptions of feasible embodiments of the present application, and are not intended to limit the protection scope of the present application. Any equivalent embodiments or modifications made without departing from the technical spirit of the present application should be included within the protection scope of the present application.

## Claims

1. A production method for a steel plate, **characterized in that** the method comprises the following processes performed in sequence:
(1) a molten steel smelting
a chemical composition of a molten steel obtained by the smelting comprises, in percentage by mass: C 0.03-0.07%, Si 0.15-0.25%, Mn 1.43-1.55%, P≤0.015%, S≤0.003%, Cr 0.05-0.25%, Ni≤0.23%, Cu 0.13-0.25%, Mo≤0.15%, Nb 0.02-0.04%, Ti 0.01-0.02%, Alt 0.02-0.05%, N≤0.005%, O≤0.002%, with a balance being Fe and inevitable impurities, wherein a strengthening equivalent Req is 0.43-0.57%, Req=2.5C+Mn/5+Cr/7+Cu/6+Mo/4+Nb/6;
(2) a continuous casting
continuously casting the molten steel obtained from the molten steel smelting process into a continuous casting slab, controlling a center segregation grade of the continuous casting slab to be better than Class B 1.0 grade, the continuous casting slab having no center porosity, and a crack grade being better than 1.0 grade;
(3) a heating
heating the continuous casting slab, a soaking stage temperature being 1130-1220°C, and a soaking time being 320-570 min;
(4) a two-stage rolling
first subjecting the continuous casting slab to a recrystallization rolling to obtain an intermediate slab, and then subjecting the intermediate slab to a non-recrystallization rolling to produce the steel plate, wherein a reduction amount of at least two passes in the recrystallization rolling stage is ≥30 mm, a thickness T of the intermediate slab is ≥170mm or T≥3t, where t is a thickness of the steel plate in mm; and a finish rolling temperature of the non-recrystallization rolling is 725-860°C;
(5) a controlled cooling
subjecting the steel plate to a water cooling, controlling a cooling rate of the steel plate to be 3-26°C/s, and an outlet water temperature of the steel plate being 210-520°C.

2. The production method for a steel plate according to claim 1, **characterized in that** in the continuous casting process, a mold level fluctuation amplitude is controlled within a range of ±2 mm, an inlet water temperature of a mold is 28-35°C, an inlet-outlet water temperature difference is 4-10°C, a narrow face water flow rate is 550±50 L/min, a wide face water flow rate is 3800±200 L/min, a casting speed is 0.6±0.05 m/min, and a total reduction at a solidification end is 5-6 mm.

3. The production method for a steel plate according to claim 1, **characterized in that** in the two-stage rolling process, when 60 mm≤t<80 mm, a reduction amount of at least two passes in the recrystallization rolling stage is ≥30 mm; when 80 mm≤t<90 mm, a reduction amount of at least two passes in the recrystallization rolling stage is ≥35 mm; when 90 mm≤t≤100 mm, a reduction amount of at least two passes in the recrystallization rolling stage is ≥38 mm.

4. The production method for a steel plate according to claim 1, **characterized in that** the molten steel smelting process comprises a converter smelting, a Ladle Furnace refining and an RH Vacuum degassing refining step performed in sequence;
in the converter smelting step, a total charge of a converter is 200±2 t, a target basicity of a final slag is 4.0, a C content in the molten steel at an end of converter smelting is 0.02-0.06%, P≤0.012%, S≤0.008%, a tapping temperature is 1640±20°C, when 1/6 of the molten steel is tapped, an alloy and a slag material are added in an order of a ferrosilicon-a metallic manganese-an aluminum ingot-a lime, wherein an addition amount of the aluminum ingot is (0.69+14[O]) kg/t;
in the Ladle Furnace refining step, a low carbon ferrochrome and a FeNb are added to the molten steel for an alloy composition adjustment, followed by adding a calcium carbide to the molten steel for a diffusion deoxidation, after a slag whitening, a deoxidation continues for more than 15 min, a sampling detection is performed and an alloy composition adjustment is conducted before leaving a station, after a chemical composition of the molten steel reaches a target range, the molten steel is maintained for at least 5 min before tapping;
in the RH Vacuum degassing refining step, 0.5±0.05 kg/t of a ferrotitanium is added to the molten steel, followed by subjecting the molten steel to a vacuum degassing and an inclusion removal treatment, controlling a vacuum degree to be <2 mBar and a degassing time to be ≥10 min; thereafter, 140±5 m of a silicon-calcium cored wire is fed into the molten steel for an inclusion modification and a soft stirring treatment, a wire feeding speed of the silicon-calcium cored wire being 1.5±0.5 m/s, a soft stirring time being >12 min, controlling a slag surface fluctuation without exposing the molten steel.

5. The production method for a steel plate according to claim 4, **characterized in that** in the molten steel smelting process, a chemical composition of the molten steel obtained by the smelting comprises, in percentage by mass: C 0.03-0.06%, Si 0.15-0.25%, Mn 1.45-1.55%, P≤0.015%, S≤0.003%, Cr 0.05-0.15%, Cu 0.15-0.25%, Nb 0.02-0.03%, Ti 0.01-0.02%, Alt 0.02-0.05%, N≤0.005%, O≤0.002%, with a balance being Fe and inevitable impurities, and a strengthening equivalent Req being 0.43-0.53%;
in the converter smelting step, 1.8±0.3 kg/t of a copper block are charged into the converter together with a scrap steel and a hot metal for smelting, an addition amount of the ferrosilicon is 1.5±0.3 kg/t, an addition amount of the metallic manganese is 12±2 kg/t, and an addition amount of the lime is 3±1 kg/t;
in the Ladle Furnace refining step, an addition amount of the low carbon ferrochrome is 1.0±0.5 kg/t, and an addition amount of the FeNb is 0.3±0.1 kg/t;
in the two-stage rolling process, a finish rolling temperature of the non-recrystallization rolling is (960-295[C]-77[Mn]-0.002t²-0.24t)±10°C;
in the controlled cooling process, a cooling rate of the steel plate is controlled to be (28-0.24t)+1°C/s, and an outlet water temperature of the steel plate is (453-1.87t)+20°C.

6. The production method for a steel plate according to claim 5, **characterized in that**:
when t≤60 mm, a microstructure of the steel plate is a polygonal ferrite + a low carbon bainite, and a proportion of the low carbon bainite is 10-45%;
when t>60 mm, a microstructure of the steel plate is a quasi-polygonal ferrite + a low carbon bainite + a degenerated pearlite, a proportion of the quasi-polygonal ferrite is 5-25%, a proportion of the low carbon bainite is 70-85%, and a proportion of the degenerated pearlite is 3-13%;
a yield strength of the steel plate is ≥355 MPa, a tensile strength is 470-630 MPa, a Z-direction tensile strength is ≥450 MPa, and a CTOD value at -10°C is ≥1.6 mm; the steel plate undergoes a welding under a heat input of 7-50 kJ/cm, a low temperature impact energy at -40°C of a heat affected zone of a welded joint is ≥230 J, and a CTOD value at -10°C of a coarse-grained zone and an intercritical zone is ≥1.2 mm.

7. The production method for a steel plate according to claim 4, **characterized in that** in the molten steel smelting process, a chemical composition of the molten steel obtained by the smelting comprises, in percentage by mass: C 0.04-0.07%, Si 0.15-0.25%, Mn 1.45-1.55%, P≤0.015%, S≤0.003%, Cr 0.10-0.20%, Ni 0.08-0.15%, Cu 0.20-0.25%, Nb 0.03-0.04%, Ti 0.01-0.02%, Alt 0.02-0.05%, N≤0.005%, O≤0.002%, with a balance being Fe and inevitable impurities, and a strengthening equivalent Req being 0.45-0.55%;
in the converter smelting step, 1.8±0.3 kg/t of a copper block and 0.85±0.1 kg/t of a nickel plate are charged into the converter together with a scrap steel and a hot metal for smelting, a C content in the molten steel at an end of converter smelting is 0.02-0.05%, an addition amount of the ferrosilicon is 1.7±0.1 kg/t, an addition amount of the metallic manganese is 15±1 kg/t, and an addition amount of the lime is 4.0±0.5 kg/t;
in the Ladle Furnace refining step, an addition amount of the low carbon ferrochrome is 2.1±0.5 kg/t, and an addition amount of the FeNb is 0.5±0.05 kg/t;
in the two-stage rolling process, a finish rolling temperature of the non-recrystallization rolling is (854-295[C]-77[Mn]-0.04t² +4.21t)±10°C;
in the controlled cooling process, a cooling rate of the steel plate is controlled to be (23+0.002t²-0.33t)±1°C/s, and an outlet water temperature of the steel plate is (0.00236³-0.48t²+28.3)±20°C.

8. The production method for a steel plate according to claim 7, **characterized in that** a microstructure of the steel plate is a quasi-polygonal ferrite + a low carbon bainite, and a proportion of the low carbon bainite is 35-80%;
a yield strength of the steel plate is ≥420 MPa, a tensile strength is 500-640 MPa, a Z-direction tensile strength is ≥475 MPa, and a CTOD value at -10°C is ≥1.3 mm; the steel plate undergoes a welding under a heat input of 7-50 kJ/cm, a low temperature impact energy at -40°C of a heat affected zone of a welded joint is ≥150 J, and a CTOD value at -10°C of a coarse-grained zone and an intercritical zone is ≥1.0 mm.

9. The production method for a steel plate according to claim 4, **characterized in that** in the molten steel smelting process, a chemical composition of the molten steel obtained by the smelting comprises, in percentage by mass: C 0.03-0.06%, Si 0.15-0.25%, Mn 1.43-1.53%, P≤0.015%, S≤0.003%, Cr 0.15-0.25%, Ni 0.13-0.23%, Cu 0.13-0.22%, Mo 0.07-0.15%, Nb 0.025-0.035%, Ti 0.01-0.02%, Alt 0.02-0.05%, N≤0.005%, O≤0.002%, with a balance being Fe and inevitable impurities, and a strengthening equivalent Req being 0.47-0.57%;
in the converter smelting step, 1.4±0.3 kg/t of a copper block, 1.4±0.3 kg/t of a nickel plate, and 1.4±0.3 kg/t of a ferromolybdenum are charged into the converter together with a scrap steel and a hot metal for smelting, a C content in the molten steel at an end of converter smelting is 0.02-0.06%, an addition amount of the ferrosilicon is 2.5±0.3 kg/t, an addition amount of the metallic manganese is 12±2 kg/t, and an addition amount of the lime is 3±1 kg/t;
in the Ladle Furnace refining step, an addition amount of the low carbon ferrochrome is 2.7±0.5 kg/t, and an addition amount of the FeNb is 0.4±0.1 kg/t;
in the two-stage rolling process, a finish rolling temperature of the non-recrystallization rolling is (955-295[C]-77[Mn]-82[Mo]-0.002t²-0.24t)±10°C;
in the controlled cooling process, a cooling rate of the steel plate is controlled to be (19-0.13t)+1°C/s, and an outlet water temperature of the steel plate is (560+0.02t²-4.5t)±20°C.

10. The production method for a steel plate according to claim 9, **characterized in that** a microstructure of the steel plate is a quasi-polygonal ferrite + a low carbon bainite, a proportion of the low carbon bainite is 65-90%, and an average grain size of the quasi-polygonal ferrite is 4-9 µm;
a yield strength of the steel plate is ≥460 MPa, a tensile strength is 520-675 MPa, a Z-direction tensile strength is ≥495 MPa, and a CTOD value at -10°C is ≥1.1 mm; the steel plate undergoes a welding under a heat input of 7-50 kJ/cm, a low temperature impact energy at -40°C of a heat affected zone of a welded joint is ≥150 J, and a CTOD value at -10°C of a coarse-grained zone and an intercritical zone is ≥0.8 mm.
